# EUROPEAN PATENT SPECIFICATION

(11) **EP 2 471 382 B1**
(45) Date of publication and mention of the grant of the patent: **02.11.2016**
(21) Application number: 10856536.7
(22) Date of filing: 10.09.2010
(51) Int. Cl.: A23L 7/109

(54) **DEVICE FOR LOOSENING NOODLE STRIP MASS**
VORRICHTUNG ZUR ABLÖSUNG EINER NUDELSTREIFENMASSE
DISPOSITIF DE DESSERRAGE DE MASSE DE RUBAN DE NOUILLES

(43) Date of publication of application: 04.07.2012
(73) Proprietor: Sanyo Foods Co., Ltd., MInato-ku, Tokyo 107-0052 (JP)
(72) Inventor: NAGAYAMA, Yoshiaki, Maebashi-shi Gunma 371-0811 (JP); ISHIDA, Nozomu, Maebashi-shi Gunma 371-0811 (JP)
(74) Representative: Hartley, Andrew Philip
(86) International application number: PCT/JP2010/065591
(87) International publication number: WO 2012/032648

(56) References cited:
- JP-A- 1 101 855
- JP-A- 4 341 149
- JP-A- H0 297 362
- JP-A- H01 231 861
- JP-A- 2001 178 387
- JP-A- 2003 009 795
- JP-A- 2003 009 796
- JP-A- 2005 143 451
- JP-A- 2009 118 757
- JP-U- H0 184 589
- JP-U- 55 144 534

## Description

### Technical Field of the Invention

The present invention relates to an apparatus for unbinding effectively a mass of mutually stuck or entangled noodles which is produced by cutting steamed or boiled noodles to have a given length.

### Background of the Invention

On a mass production line for making instant noodles automatically, there have been provided two drying steps. In one drying step, a mass of noodles obtained by cutting heated noodles are folded, and in the other drying step a mass of mutually stuck noodles are unbound after cutting. These two drying steps have merits and demerits.

In the former drying step, noodles are simply folded before drying and the drying process can be carried out at a high speed, but a mass of mutually stuck noodles cannot be unbound effectively. In the latter drying step, a mass of mutually stuck noodles can be effectively unbound, but a production speed is low.

In an apparatus for producing a mass of effectively unbound noodles, there is provided an unbinding step as a preparatory step before a drying step such as an oil fry drying step, a hot wind drying step and a microwave drying step. In the following Patent Documents 1-3, there are disclosed known unbinding steps for decreasing a degree of a binding condition of a mass of mutually stuck noodles, said mass of noodles being obtained through successive steps of a mixing and kneading step, a pressing step, a cutting process and a heating step with steam or hot water.

### Prior Art Documents

Patent Document 1: Japanese Patent Laid-open 1-101855
Patent Document 2: Japanese Patent Publication H54-44742
Patent Document 3 : Japanese Utility Model Publication S47-42553

JP 2005 143451 A discloses an apparatus which serves to dispense a measured amount of boiled noodles.

JP 55 144534 discloses, in Figure 2, a device for unsticking short lengths of noodle. The device has a horizontally rotating axle with a plurality of radially extending arms which are arranged in a spiral pattern along the rotating axis. The arms serve to unstick the noodles and transport the noodles horizontally.

### Summary of the Invention

### Problems to be Solved by the Invention

In the Patent Document 1, there is disclosed a known rotary unbinding apparatus which can be used in the above mentioned step of unbinding a mass of mutually stuck noodles. In this known unbinding apparatus there are only provided two wings rotating at a high speed.

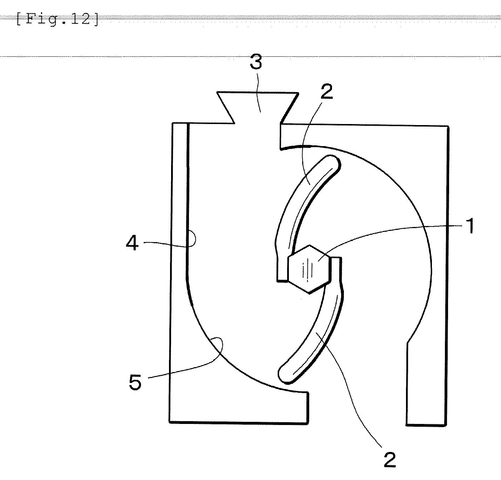

In the Patent Documents 2 and 3, there are disclosed apparatus for unbinding a mass of mutually stuck instant noodles, in which noodle hitting rods are rotated. As illustrated in Fig. 12, noodle hitting rods 2 are secured to a rotating shaft 1 such that the noodle hitting rods are aligned in an axial direction of the rotating shaft like a comb. A mass of noodles is dropped into the unbinding apparatus from an upper inlet 3 together with a given amount of water, and then the mutually stuck noodles are hit against an inner wall by means of the noodle hitting rods 2. In the known apparatus, an upper inner wall surface 4 is formed to be upright and a lower inner wall surface 5 succeeding the upper inner wall surface 4 to locate below a horizontal level of the rotating shaft 1 is circularly curved, and a mass of mutually stuck noodles is forcedly unbound between the noodle hitting rods 2 and the circularly curved inner wall surface 5.

In the known noodle unbinding apparatus, a mass of mutually stuck noodles is hit against the inner wall surface 5 by means of the noodle hitting rods 2, but since a mass of mutually stuck noodles is easily dropped downward, it passes through the inner wall surface 5 within a short time period, and therefore a mass of mutually stuck noodles could not be effectively unbound.

The present invention has for its object to provide an apparatus for unbinding a mass of mutually stuck noodles in an effective manner to obtain a mass of noodles having an efficiently reduced degree of binding condition.

### Means for Solving the Problems

According to the invention, there is provided an apparatus for unbinding a mass of mutually stuck noodles according to claim 1.

### Merits of the Invention

In the noodle unbinding apparatus according to the invention, a mass of mutually stuck noodles obtained by cutting steamed or boiled noodles to have a given length can be effectively unbound by a cooperation of the unbinding member and the unbinding inner wall surface. In this manner, a mass of noodles having an efficiently reduced degree of binding condition can be obtained.

### Brief Description of the Drawings

Fig. 1 is a perspective view showing a major portion of an embodiment 1 of the noodle unbinding apparatus according to the invention;
Fig. 2 is a cross sectional view of the embodiment 1;
Fig. 3 is an explanatory view depicting a function of the noodle unbinding apparatus according to the invention;
Fig. 4 is a photograph showing a mass of noodles before the unbinding operation;
Fig. 5 is a photograph illustrating a mass of noodles after the unbinding operation;
Fig. 6 is an explanatory view representing the unbinding operation without the unbinding inner wall surface of the present invention;
Fig. 7 is an explanatory view showing the unbinding operation with the unbinding inner wall surface according to the invention;
Figs. 8 is views showing various unbinding inner wall surfaces having different extending angles;
Figs. 9 is a cross sectional view presenting a modified shape of the unbinding inner wall surface;
Figs. 10 is perspective views illustrating various shapes of the unbinding rod according to the invention;
Fig. 11 is a perspective view showing a major portion of a second embodiment 2 of the noodle unbinding apparatus according to the invention;
Fig. 12 is a cross sectional view showing a known noodle unbinding apparatus.

### Description of the Preferred Embodiments

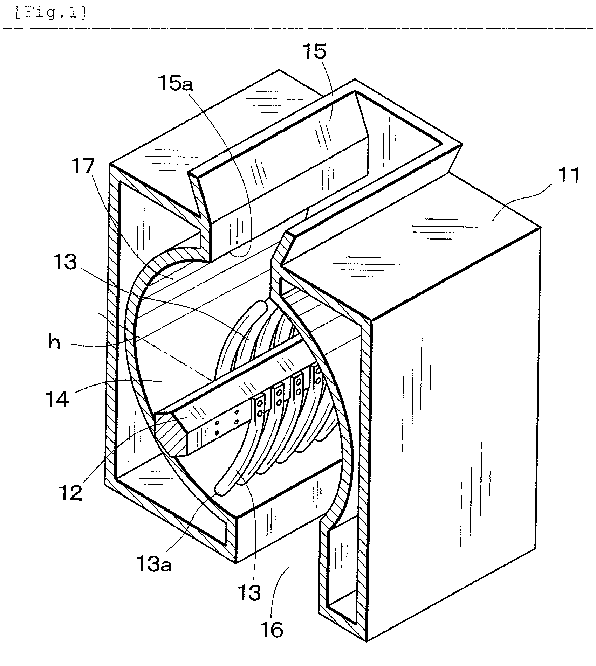

The present invention will be explained in detail with reference to the embodiments shown in the figures 1 to 11.

### Embodiment 1

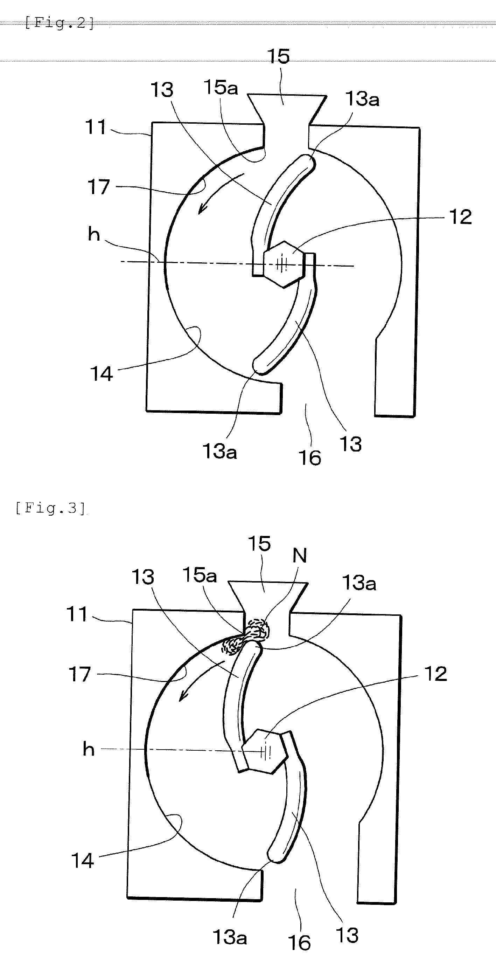

Figs. 1 and 2 are perspective and cross sectional views, respectively showing a major portion of a first embodiment 1 of the noodle unbinding apparatus according to the invention. A noodle unbinding step is provided between a streaming or boiling step and a drying step. The noodle unbinding apparatus used in this noodle unbinding step includes a metal housing 11 and a rotating shaft 12 is arranged horizontally at a central portion of the housing 11 such that the rotating shaft 12 can be rotated by an external driving means such as an electric motor not shown in the drawing. In the present embodiment, a pair of unbinding members is secured to the rotating shaft 12 at diagonally opposed positions. Each of the unbinding members is formed by a plurality of noodle unbinding rod 13 formed by a metal rod having a given length and is bent to project toward a rotating direction of the rotating shaft 12, and these noodle unbinding rods 13 are secured to the rotating shaft 12 to extend in a direction perpendicular to an axial direction of the rotating shaft and to be aligned along the rotating shaft 12 to form a comb.

The rotating shaft 12 is formed by a metal rod having a cross sectional shape of polygon such as hexagon. The noodle unbinding rods 13 of each of the two unbinding members are secured to one surface of the polygon of the rotating shaft 12 by means of screws or welding, and therefore the noodle unbinding rods 13 can be fixed at given positions accurately. The noodle unbinding rods 13 are rotated by the rotating shaft 12 in a counter-clockwise direction in Figs. 1 and 2. Each of the noodle unbinding rods 13 is formed by a metal rod having a diameter of 8 mm and a tip 13a of the metal rod is formed in a semispherical shape such that noodles could hardly be cut by the unbinding rod 13. The successive unbinding rods 13 are separated by a pitch substantially equal to a diameter of the unbinding rods. Furthermore, the unbinding rods 13 of one of the two unbinding members may be shifted in an axial direction of the rotating shaft 12 with respect to the unbinding rods 13 of the other unbinding member by a half of the pitch.

The housing 11 includes an inner wall surface 14 having a cross sectional shape of a circular arc which is concentric to a circle drawn by a locus of the tips 13a of unbinding rods 13 and has, for example, a radius of 9 cm. The housing 11 further includes an inlet 15 at an upper middle portion and an outlet 16 at a lower middle portion. A mass of mutually stuck noodles is introduced into the housing from the upper inlet 15 and a mass of unbound noodles is discharged from the lower outlet 16. A width of the housing 11 may be determined in accordance with a width of the noodle manufacturing line within a range from several tens cm to 1 m. It should be noted that the inlet 15 and outlet 16 have a width substantially equal to a width of the housing 11.

The unbinding rods 13 are rotated at a high speed by means of the driving shaft 12 in the counter-clockwise direction in Fig. 2 and the tips 13a of the unbinding rods 13 are moved along the inner wall surface 14 while a very small clearance is formed therebetween. A portion of the inner wall surface 14 extending from a horizontal level h corresponding to a level of the rotating shaft 12 to a lower end 15a of the inlet 15 serves as an unbinding surface 17. This unbinding surface 17 is formed by the circular arc and is separated from the unbinding rods 13 by a very small clearance. A mass of mutually stuck noodles heated by steam or boiled with a hot water in a previous manufacturing step is introduced into a boundary between the inlet 15 and the unbinding surface 17 and is effectively unbound upon passing through a region near an entrance of the unbinding surface 17. It should be noted that the lower end 15a of the inlet 15 situating at the boundary between the inlet 15 and the unbinding surface 17 is preferably formed to have a round surface such that the unbinding rods 13 might not cut the noodles.

The unbinding surface 17 locates at an upper portion of the inner wall surface 14 and extends to cover the unbinding rods 13. Particularly, the entrance of the unbinding surface 17 has an important roll for effectively unbinding the mutually stuck noodles. As illustrated in Fig. 3, a mass of mutually stuck noodles N serving for one meal is introduced into the housing 11 from the inlet 15 together with a given amount of water and is conveyed in the counter-clockwise direction by the unbinding rods 13 driven by the rotating shaft 12 into a position near the entrance of the unbinding surface 17. A clearance between the unbinding surface 17 and the unbinding rods 13 is very small to form a very narrow space therebetween, and therefore a mass of noodles N is forcedly fed into this narrow space and is repeatedly unbound by means of the unbinding rods 13 rotating at a high speed.

While a mass of noodles N is retained in a range near the entrance of the unbinding surface 17, the tips 13a of the unbinding rods 13 hit a mass of noodles N to be served for one meal from ten to several tens times. In this manner, the unbinding rods 13 effectively unbind a mass of noodles N, while the noodles are not cut.

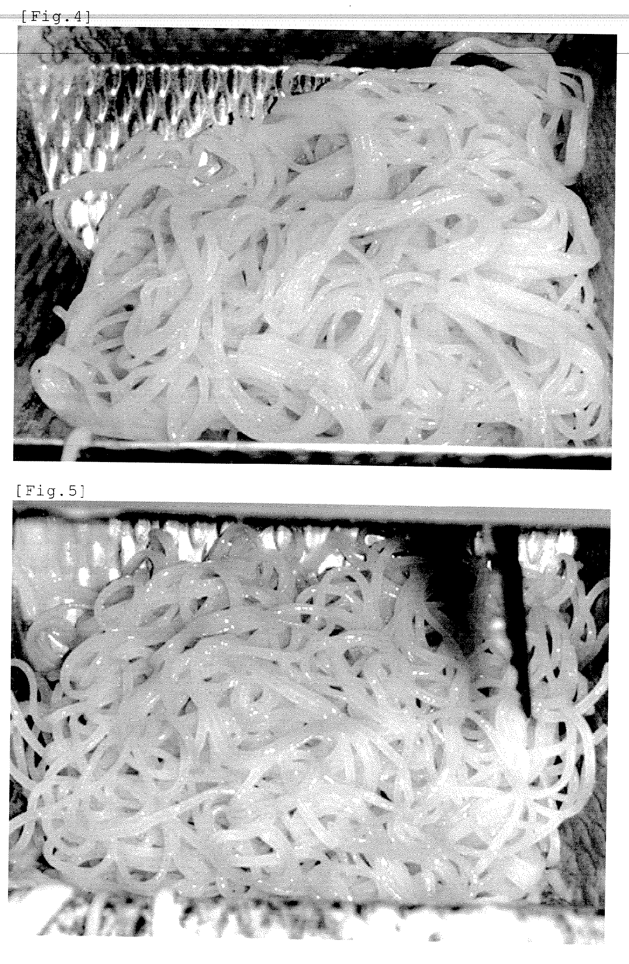

Fig. 4 is a photograph representing a mass of noodles N before being charged into the noodle unbinding apparatus and Fig. 5 is a photograph showing a mass of noodles N being discharged out of the noodle unbinding apparatus. In a mass of noodles N before the unbinding operation, there are many stacks of mutually stuck noodles, but after the unbinding operation, the number of the stacks of mutually stuck noodles is decreased and the number of mutually stuck noodles in a stack is also reduced.

It has been experimentally confirmed that in order to attain an effective unbinding function, a clearance between the unbinding surface 17 and the unbinding rods 13 may be preferably set to 4-5 mm. The smaller the clearance is, the more resistance for retaining a mass of noodles N in a region near the entrance of the unbinding surface 17 can be obtained. However, if the clearance is set to a too small value, a mass of noodles N might be damaged and the unbinding rods 13 might be brought into contact with the unbinding surface 17. It is easily understood that if the clearance is too large, a mass of noodles N could not be subjected to a sufficient resistance and might pass through the unbinding surface 17 within a very short time period.

The following Tables 1 and 2 represent a result of experiments for proving the unbinding function with and without the unbinding surface according to the invention. In the experiments with the unbinding surface according to the invention, use was made of the unbinding surface 17 illustrated in Fig. 2 and the clearance between the unbinding surface 17 and the unbinding rods 13 was set to 5 mm. Experiments without the unbinding surface according to the invention were conducted by using the known noodle unbinding apparatus shown in Fig. 12. At first, steamed noodles were prepared in the following manner. A wheat flour of 900 gr and a potato starch of 100 gr were mixed with a solution containing a water of 330 ml, a sodium carbonate of 3 gr and a salt of 10 gr and a mass of these materials was kneaded to obtain a dough. Then, the dough thus obtained was pressed and was cut by means of a cutting blade of No. 20 to produce noodles having a thickness of 1.2 mm. After the noodles were corrugated to make waves, the noodles were continuously heated by steam. Finally the noodles were cut into a mass of noodles having a length of about 60 cm. The mass of noodles thus obtained has a weight of 100 gr and is served for one meal. After spraying fresh water on the noodles, a mass of noodles was charged into the noodle unbinding apparatuses. Each of the experiments was conducted twenty times. A time period was measured by means of a stopwatch.

The rotating shaft 12 was rotated at 1000 rpm (round/minute), and the unbinding rods 13 were formed by the curved round rods shown in the embodiment 1. A degree of unbinding is represented by **A** extremely excellent, **B** excellent, **C** ordinary and D bad.

**Table 1 Time from Charge to Discharge and Degree of Unbinding**

| Test Number | Without Unbinding Surface | With Unbinding Surface |
|---|---|---|
| 1 | 0.59 | 0.80 |
| 2 | 0.55 | 0.85 |
| 3 | 0.54 | 0.83 |
| 4 | 0.52 | 0.78 |
| 5 | 0.55 | 0.85 |
| 6 | 0.55 | 0.86 |
| 7 | 0.58 | 0.85 |
| 8 | 0.57 | 0.84 |
| 9 | 0.56 | 0.85 |
| 10 | 0.56 | 0.84 |
| 11 | 0.52 | 0.82 |
| 12 | 0.55 | 0.83 |
| 13 | 0.53 | 0.86 |
| 14 | 0.55 | 0.83 |
| 15 | 0.58 | 0.84 |
| 16 | 0.57 | 0.80 |
| 17 | 0.56 | 0.83 |
| 18 | 0.56 | 0.84 |
| 19 | 0.57 | 0.83 |
| 20 | 0.58 | 0.82 |
| Average | 0.557 | 0.833 |
| Degree of Unbinding | **C** | **A** |

**Table 2 Retaining Time (second) of Noodles near Inlet 15**

| Test Number | Without Unbinding Surface | With Unbinding Surface |
|---|---|---|
| 1 | 0.30 | 0.64 |
| 2 | 0.35 | 0.65 |
| 3 | 0.33 | 0.64 |
| 4 | 0.32 | 0.62 |
| 5 | 0.30 | 0.66 |
| 6 | 0.32 | 0.64 |
| 7 | 0.32 | 0.65 |
| 8 | 0.31 | 0.63 |
| 9 | 0.30 | 0.62 |
| 10 | 0.32 | 0.64 |
| 11 | 0.30 | 0.65 |
| 12 | 0.34 | 0.63 |
| 13 | 0.32 | 0.63 |
| 14 | 0.33 | 0.62 |
| 15 | 0.30 | 0.60 |
| 16 | 0.32 | 0.64 |
| 17 | 0.35 | 0.63 |
| 18 | 0.32 | 0.65 |
| 19 | 0.30 | 0.62 |
| 20 | 0.32 | 0.64 |
| Average | 0.319 | 0.635 |

In the Tables 1 and 2, a function of the unbinding surface 17 can be estimated by a time period during which a mass of noodles N is retained near the entrance of the unbinding surface 17. That is to say, in the known noodle unbinding apparatus shown in Fig. 12, a mass of noodles N passes through an upper portion of the inner wall surface 5 for the measured time period, while in the noodle unbinding apparatus shown in Fig. 3, a mass of noodles N is held in an area near the entrance of the unbinding surface 17 for the measured time period. Therefore, a resistance subjected to a mass of noodles N can be represented by the measured time period and a degree of unbinding function is related to the measured time period. In the Tables 1 and 2, the longer time periods can be obtained with the unbinding surface according to the invention and a mass of noodles N is subjected to the unbinding operation by the unbinding rods 13 for a longer time period.

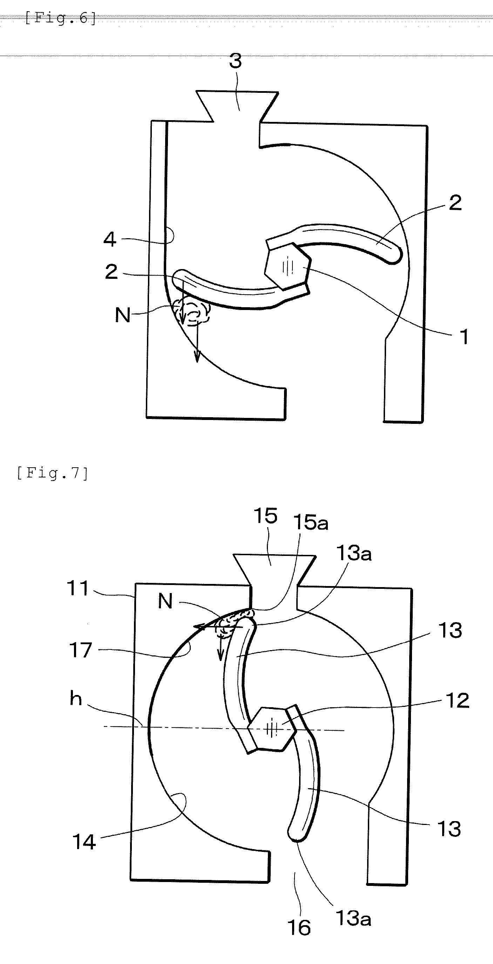

Fig. 6 is an explanatory figure representing the unbinding operation of the known noodle unbinding apparatus illustrated in Fig. 12. In the known apparatus, a mass of noodles N charged into the inlet 3 at an upper portion of the upper inner wall surface 4 is subjected to a force due to the gravity as well as to a force by the noodle hitting rods 2, and these two forces are directed downward. That is to say, in the known apparatus, the noodle hitting rods 2 give a mass of noodles the force whose direction is identical with that of the gravitational force. Therefore, a mass of noodles N could not be remained in a region near the entrance of the inner wall surface 5 and easily passes through the inner wall surface 5 within a short time period.

In the noodle unbinding apparatus of the above explained embodiment 1 of the present invention, when a mass of noodles N is charged into the apparatus from the upper inlet 15, a mass of noodles is subjected to a horizontal force as shown by an arrow in Fig. 7, when a mass of noodles N passes through the entrance of the unbinding surface 17. In this manner, a mass of noodles N is subjected not only to the gravitational force but also to the horizontal force, and therefore a mass of noodles N is retained in a region near the entrance of the unbinding surface 17 for a longer time period. During this longer time period, the unbinding rods 13 hit a mass of noodles N repeatedly against the unbinding surface 17, and at the same time, the mutually stuck noodles are unbound effectively.

In the manner explained above, in the present embodiment 1, a mass of noodles N is introduced into the narrow space between the unbinding surface 17 and the unbinding rods 13, and is forcedly unbound by means of the unbinding rods 13. Therefore, a degree of binding condition of a mass of noodles N can be decreased effectively.

It is important for attaining the effective unbinding function of the unbinding rods for a mass of noodles how to determine a position of the entrance of the unbinding surface 17 with respect to the inner wall surface 14. The effective unbinding function can be performed by providing the unbinding surface 17 above the horizontal level h. Furthermore, it is advantageous to extend the unbinding surface 17 up to the up most position as far as possible in order to produce a large resistance for unbinding a mass of noodles. In the known noodle unbinding apparatus, the unbinding surface is provided below the horizontal level h, and therefore a sufficiently large resistance for unbinding function could not be produced and a mass of noodles passes through the unbinding surface within a very short time period.

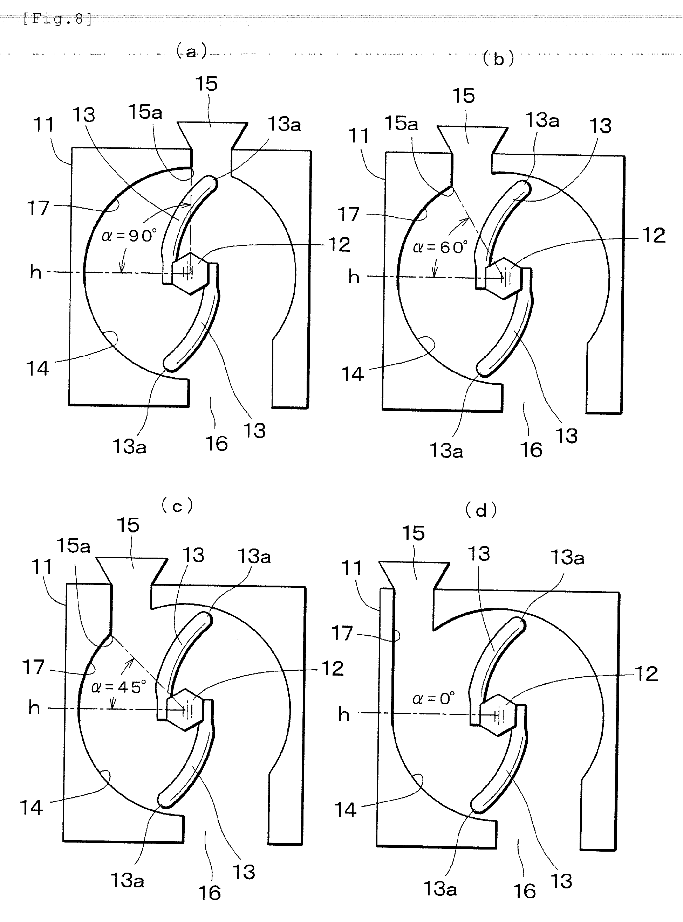

The following Tables 3 and 4 represent a change in the unbinding function due to the position of the unbinding surface 17. Experiments similar to the previously explained experiments were conducted, while an unbinding angle α of the unbinding surface 17 was changed. Figs 8(a) to 8(c) represent various unbinding angles α realized by changing a position of the inlet 15. The unbinding angle α may be defined as an angle over which the unbinding surface 17 extends from the horizontal level h to the entrance of the unbinding surface 17, i.e. the lower end 15a of the inlet 15. Fig. 8(d) illustrates the known noodle unbinding apparatus, in which the unbinding angle α is set to 0°.

**Table 3 Time from Charge to Discharge and Degree of Unbinding**

| Test Number | Angle α | 0° | 45° | 60° | 90° |
|---|---|---|---|---|---|
| 1 | | 0.59 | 0.65 | 0.70 | 0.80 |
| 2 | | 0.55 | 0.66 | 0.68 | 0.85 |
| 3 | | 0.54 | 0.67 | 0.71 | 0.83 |
| 4 | | 0.52 | 0.68 | 0.69 | 0.78 |
| 5 | | 0.55 | 0.67 | 0.72 | 0.85 |
| 6 | | 0.54 | 0.65 | 0.70 | 0.83 |
| 7 | | 0.52 | 0.67 | 0.73 | 0.84 |
| 8 | | 0.55 | 0.68 | 0.68 | 0.82 |
| 9 | | 0.52 | 0.63 | 0.68 | 0.83 |
| 10 | | 0.51 | 0.63 | 0.69 | 0.81 |
| 11 | | 0.55 | 0.62 | 0.70 | 0.85 |
| 12 | | 0.54 | 0.64 | 0.67 | 0.83 |
| 13 | | 0.54 | 0.64 | 0.68 | 0.81 |
| 14 | | 0.55 | 0.67 | 0.68 | 0.79 |
| 15 | | 0.53 | 0.68 | 0.70 | 0.80 |
| 16 | | 0.52 | 0.64 | 0.72 | 0.82 |
| 17 | | 0.57 | 0.65 | 0.71 | 0.83 |
| 18 | | 0.55 | 0.65 | 0.69 | 0.82 |
| 19 | | 0.53 | 0.64 | 0.68 | 0.83 |
| 20 | | 0.58 | 0.68 | 0.70 | 0.79 |
| Average | | 0.543 | 0.656 | 0.696 | 0.821 |
| Degree of Unbinding | | **C** | **B** | **A** | **A** |

**Table 4 Retaining Time (second) of Noodles near Inlet 15**

| Test Number | Angle α | 0° | 45° | 60° | 90° |
|---|---|---|---|---|---|
| 1 | | 0.30 | 0.42 | 0.50 | 0.64 |
| 2 | | 0.35 | 0.43 | 0.48 | 0.65 |
| 3 | | 0.33 | 0.42 | 0.50 | 0.64 |
| 4 | | 0.32 | 0.43 | 0.49 | 0.62 |
| 5 | | 0.30 | 0.40 | 0.50 | 0.66 |
| 6 | | 0.34 | 0.43 | 0.51 | 0.65 |
| 7 | | 0.32 | 0.42 | 0.48 | 0.66 |
| 8 | | 0.30 | 0.42 | 0.48 | 0.65 |
| 9 | | 0.34 | 0.40 | 0.47 | 0.66 |
| 10 | | 0.35 | 0.43 | 0.50 | 0.64 |
| 11 | | 0.33 | 0.42 | 0.47 | 0.65 |
| 12 | | 0.32 | 0.43 | 0.48 | 0.65 |
| 13 | | 0.30 | 0.41 | 0.49 | 0.62 |
| 14 | | 0.33 | 0.42 | 0.50 | 0.64 |
| 15 | | 0.35 | 0.43 | 0.49 | 0.64 |
| 16 | | 0.30 | 0.42 | 0.48 | 0.65 |
| 17 | | 0.32 | 0.40 | 0.49 | 0.66 |
| 18 | | 0.33 | 0.42 | 0.49 | 0.67 |
| 19 | | 0.32 | 0.43 | 0.50 | 0.63 |
| 20 | | 0.30 | 0.41 | 0.48 | 0.63 |
| Average | | 0.323 | 0.420 | 0.489 | 0.645 |

As can be understood from the Tables 3 and 4, the larger the unbinding angle α is, the longer time period for unbinding the noodles retained in a region near the entrance of the unbinding surface 17 can be obtained and much more effective unbinding function can be performed. This is due to the fact that the force to which a mass of noodles is subjected becomes near the horizontal direction and a mass of noodles can be retained in the unbinding area for a longer time period.

The uppermost position of the entrance of the unbinding surface 17 may be set to a position at which the tips 13a of the unbinding rods 13 become the highest position. That is to say, the maximum unbinding angle α should be set to about 90°. If the unbinding angle α is set to a value larger than 90°, a force given by the unbinding rods 13 to a mass of noodles is directed upwardly, and some noodles might be ejected upwardly out of the inlet 15.

The following Table 5 represents a relation between the rotating speed of the rotating shaft 12 and a degree of unbinding. The experiments were conducted in a similar manner to the previous experiments and the unbinding angle α of the unbinding surface 17 was set to 90°.

**Table 5 Relation between Rotation Speed of Shaft 12 and Degree of Unbinding**

| | | | | | | | |
|---|---|---|---|---|---|---|---|
| Rpm | 100 | 300 | 500 | 800 | 1000 | 1200 | 1500 |
| Degree of Unbinding | **D** | **D** | **D** | **B** | **A** | **A** | **A** |

From the experimental results shown in the Table 5, it is understood that the rotation speed of the rotating shaft 12 is preferably set to a value not less than 800 rpm. When the rotation speed is too low, a mass of noodles could not be effectively brought into contact with the unbinding rods 13 and mighty be dropped toward the rotating shaft 12. Furthermore, a mass of noodles for one meal can be unbound much more efficiently in accordance with in increase of the number of contacts of the noodles with the unbinding rods 13.

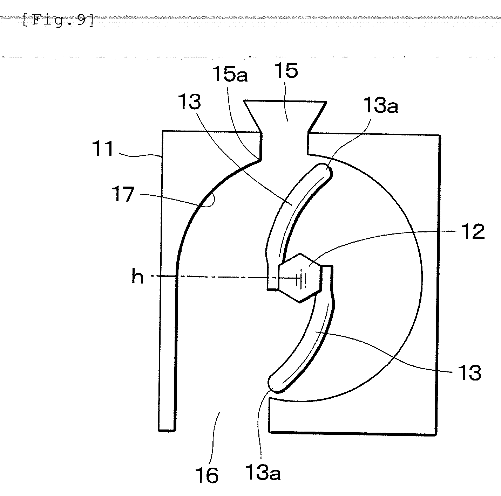

Fig. 9 is a cross sectional view showing a modified inner wall surface 14 of the noodle unbinding apparatus according to the invention. A portion of the inner wall surface 14 below the horizontal level h is eliminated. In the known noodle unbinding apparatus, a portion of the inner wall surface situating below the horizontal level forms the unbinding surface and performs the unbinding function to a certain extent. According to the invention, only the unbinding surface 17 provided above the horizontal level h can perform the sufficient unbinding function, and therefore the unbinding surface situating below the horizontal level h can be dispensed with.

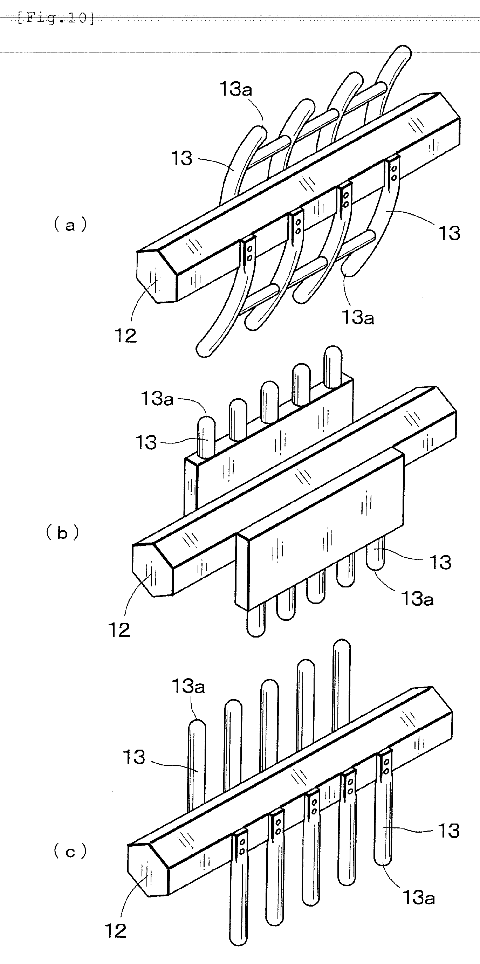

In the present embodiment, the unbinding rods 13 are arranged like a comb, but according to the invention, the unbinding rods 13 may be formed in various forms as illustrated in Figs. 10(a)-10(c), in which curved unbinding rods 13 secured to the rotating shaft 12 are coupled with each other at middle portions thereof, straight short unbinding rods 13 are projected from a plate-like block secured to the rotating shaft 12, and straight unbinding rods 13 are secured to the rotating shaft 12. However, if a surface of a member supporting the unbinding rods 13 has an excess area, air resistance is increased, therefore, unnecessary wind might be generated.

In order to unbind a mass of noodles much more effectively, a clearance between the unbinding rods 13 and the unbinding surface 17 is adjusted and the unbinding rods 13 are formed to scrape scrape the noodles. For instance, the tip of the unbinding rod may be formed to have depressions and projections. Moreover, when the unbinding rods 13 are curved as shown in the first embodiment, a mass of noodles could be hardly curled around the unbinding rods.

In the embodiment 1, the unbinding rods 13 are secured to the rotating shaft 12 to form two columns. According to the invention, only one column of the unbinding rods 13 may be provided on the rotating shaft 12 or three columns of the unbinding rods 13 may be secured to the rotating shaft 12 to form three columns which are separated from each other in the circumferential direction by equal angles. The umber of columns of the unbinding rods 13 may be suitably determined in relation of the rotation speed of the rotating shaft 12.

In order to give a mass of noodles much larger resistance, the unbinding surface 17 may be machined to have a rough surface such as embossing or small ridges extending in a direction perpendicular to a moving direction of a mass of noodles may be formed on the unbinding surface 17.

### Embodiment 2

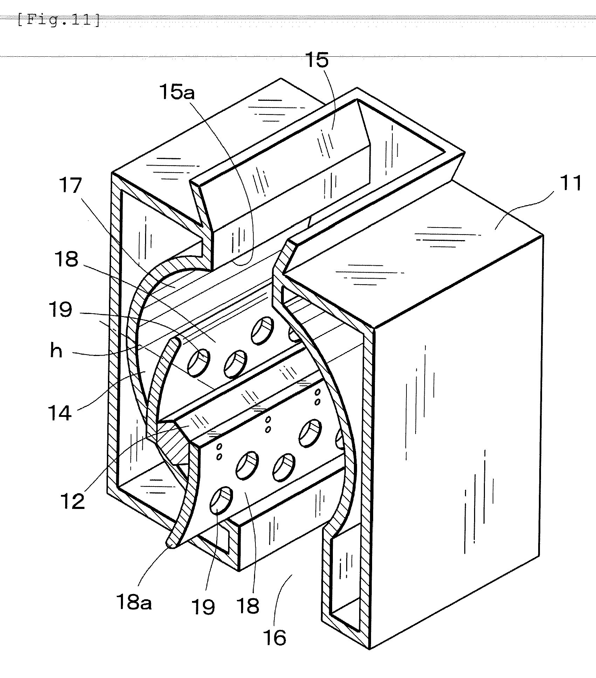

Fig. 11 is a perspective view depicting a major portion of a second embodiment of the noodle unbinding apparatus according to the invention. The unbinding member includes two unbinding plates 18 which are secured to a rotating shaft 12 and are curved toward the rotational direction.

A tip 18a of the unbinding plate 18 has a semicircular cross sectional shape so that a mass of noodles could not be damaged by the unbinding plate. Furthermore, in order to decrease a generation of wind, several through holes 19 are formed in the unbinding plate 18.

As compared with the unbinding rods 13 of the first embodiment 1, the unbinding plates 18 used in the present embodiment 2 have no function to comb the mutually entangled noodles, but a mass of noodles can be effectively unbound by the tips 18a of the unbinding plates 18 in a region near the entrance of the unbinding surface 17 in a similar manner to the first embodiment. Since the unbinding plates 18 have no vacant spaces between the comb-like unbinding rods 13, the unbinding function can be performed over a whole width of a mass of noodles.

In the embodiments so far explained, the unbinding surface 17 is curved along an arc which is concentric to a circle drawn by the tips 13a, 18a of the unbinding rods 13 and unbinding plates 18. However, according to the invention, it is not always necessary to form the unbinding surface along the concentric circle. According to the invention, a mass of noodles is unbound by the unbinding member most efficiently in a region near the entrance of the unbinding surface 17, i.e. a boundary region between the unbinding surface 17 and the inlet 15. Therefore, it is sufficient to provide the entrance of the unbinding surface 17 with a suitable clearance with respect to the unbinding member for attaining the efficient unbinding function. Then, a lower portion of the unbinding surface 17 may be separated from the unbinding member to avoid possible contact with the unbinding member. In this case, the unbinding surface 17 may be formed along an arc whose center is shifted from a center of the circle drawn by the tip of the unbinding member.

Furthermore, it is not always necessary to provide the unbinding surface 17 along a circular arc as long as a suitable clearance for attaining the effective unbinding is formed with respect to the unbinding member.

Moreover, it is not always necessary to provide the unbinding surface 17, the preparatory unbinding surface 18 and lower inner wall surface 14 along a circular arc as long as the housing 11 is covered with these surfaces such that an unbound mass of noodles cannot be ejected from the housing 11.

### Explanation of the Reference Numerals

- 11: housing
- 12: rotating shaft
- 13: unbinding rod
- 14: inner wall surface
- 15: inlet
- 16: outlet
- 17: unbinding surface
- 18: unbinding plate
- 19: through hole

## Claims

1. An apparatus for unbinding a mass of mutually stuck noodles comprising a housing (11) having an upper inlet (15) at an upper middle portion and a lower outlet (16) provided underneath the inlet (15) at a lower middle portion, a rotating member rotated around a rotating shaft (12) being arranged horizontally within said housing (11) underneath said inlet (15) and being rotated by a driving means, and a noodle unbinding member secured to said rotating shaft (12) to extend in a radial direction, wherein said housing (11) includes an inner wall surface (14) having a circular arc to serve as an unbinding surface (17) extending from said upper inlet (15) to a horizontal level passing through a center of said rotating member, wherein said inner wall surface (14) extends substantially along a curved surface which has a radius larger than a radius of a circle drawn by a locus of a rotating tip of said unbinding member rotated by said rotating member and is separated from the rotating tip of said unbinding member by a clearance, and wherein at least an entrance of said unbinding surface (17) is situated close to said circle drawn by the locus of the rotating tip of said unbinding member rotated by said rotating member such that a mass of mutually stuck noodles for one meal charged into the housing (11) from the upper inlet (15) is unbound in such a manner that the unbounding members repeatedly hit the mass of stuck noodles against the unbinding surface (17) in a region near said entrance of the unbinding surface (17) and discharge the unbound noodles from said lower outlet (16).

2. The apparatus according to claim 1, wherein said inlet (15) and said outlet (16) have a width substantially equal to a width of said housing (11).

3. The apparatus according to claim 1, wherein the entrance of said unbinding surface (17) is arranged at a lower end of said inlet (15).

4. The apparatus according to any one of claims 1-3, wherein said unbinding surface (17) includes depressions and projections.

5. The apparatus according to claim 1, wherein the clearance between said inner wall surface (14) and the tip of said unbinding member is set to be between 4mm and 5mm.

6. The apparatus according to claim 1, wherein a rotation speed of said rotating shaft (12) is more than 800 rpm.

7. The apparatus according to any one of claims 1-6, wherein a plurality of said unbinding members are secured to said rotating member at positions which are separated from each other by an equal angle viewed in a rotational direction of the rotating member.

8. The apparatus according to any one of claims 1-7, wherein said tip of the unbinding member is formed to have a semicircular cross sectional shape.

9. The apparatus according to any one of claims 1-8, wherein said unbinding member is bent to project toward a rotational direction of the unbinding member.

10. The apparatus according to claims 1-9, wherein said rotating shaft (12) is formed by a rod having a cross sectional shape of polygon and said noodle unbinding rods (13) of each of the two unbinding members are secured to one surface of the polygon of the rotating shaft (12).

11. The apparatus according to any one of claims 1-10, wherein said unbinding member includes a plurality of unbinding rods (13) each having a circular cross section, and said unbinding rods (13) are secured to said rotating member and are aligned in an axial direction of the rotating member to form a comb.

12. The apparatus according to claims 1-11, wherein said unbinding members include an unbinding plate formed by a plate-like body.

## Patentansprüche

1. Vorrichtung zur Trennung einer Masse aneinander haftender Nudelstreifen, umfassend ein Gehäuse (11) mit einem oberen Einlass (15) an einem oberen Mittelabschnitt und einem unteren Auslass (16), der unterhalb des Einlasses (15) an einem unteren Mittelabschnitt bereitgestellt wird, ein rotierendes Element, das um eine rotierende Welle (12) rotiert wird, die horizontal in dem Gehäuse (11) unterhalb des Einlasses (15) angeordnet ist und durch ein Antriebmittel rotiert wird, und ein Nudelablöseelement, das an der rotierenden Welle (12) befestigt ist, so dass es sich in einer Radialrichtung erstreckt, wobei das Gehäuse (11) eine Innenwandfläche (14) mit einem Kreisbogen beinhaltet, um als Trennfläche (17) zu dienen, die sich von dem oberen Einlass (15) zu einer horizontalen Ebene erstreckt, die eine Mitte des rotierenden Elements durchläuft, wobei die Innenwandfläche (14) sich im Wesentlichen entlang einer gekrümmten Fläche erstreckt, die einen Radius aufweist, der größer als der Radius eines Kreises ist, der durch eine Ortslinie einer rotierenden Spitze des Trennelements gezeichnet wird, das durch das rotierende Element rotiert wird, und durch einen Abstand von der rotierenden Spitze des Trennelements getrennt ist, und wobei sich mindestens ein Zugang zu der Trennfläche (17) nahe an dem Kreis befindet, der durch die Ortslinie der rotierenden Spitze des Trennelements gezogen ist, das durch das rotierende Element rotiert wird, so dass eine Masse aneinander anhaftender Nudelstreifen für eine Einzelmahlzeit, die über den oberen Einlass (15) in das Gehäuse (11) eingebracht wird, in einer solchen Weise gelöst wird, dass die Löseelemente in einer Region nahe dem Zugang zu der Lösefläche (17) wiederholt die Masse aneinander anhaftender Nudelstreifen gegen die Trennfläche (17) schlagen und die gelösten Nudeln über den unteren Auslass (16) ausgeben.

2. Vorrichtung nach Anspruch 1, wobei der Einlass (15) und der Auslass (16) eine Breite aufweisen, die im Wesentlichen einer Breite des Gehäuses (11) entspricht.

3. Vorrichtung nach Anspruch 1, wobei der Zugang zu der Trennfläche (17) am unteren Ende des Einlasses (15) angeordnet ist.

4. Vorrichtung nach einem der Ansprüche 1 bis 3, wobei die Trennfläche (17) Vertiefungen und Vorsprünge beinhaltet.

5. Vorrichtung nach Anspruch 1, wobei der Abstand zwischen der Innenwandfläche (14) und der Spitze des Trennelements auf zwischen 4 mm und 5 mm eingestellt ist.

6. Vorrichtung nach Anspruch 1, wobei eine Rotationsgeschwindigkeit der rotierenden Welle (12) mehr als 800 UpM beträgt.

7. Vorrichtung nach einem der Ansprüche 1 bis 6, wobei eine Vielzahl der Trennelemente an dem rotierenden Element an Positionen befestigt ist, die, in Rotationsrichtung des rotierenden Elements gesehen, voneinander um einen gleichen Winkel getrennt sind.

8. Vorrichtung nach einem der Ansprüche 1 bis 7, wobei die Spitze des Trennelements so geformt ist, dass sie eine halbkreisförmige Querschnittform aufweist.

9. Vorrichtung nach einem der Ansprüche 1 bis 8, wobei das Trennelement so gebogen ist, dass es in Richtung einer Rotationsrichtung des Trennelements vorspringt.

10. Vorrichtung nach einem der Ansprüche 1 bis 9, wobei die rotierende Welle (12) durch einen Stab mit einer vieleckigen Querschnittform gebildet ist und die Nudeltrennstäbe (13) von jedem der beiden Trennelemente an einer Fläche des Vielecks der Rotationswelle (12) befestigt sind.

11. Vorrichtung nach einem der Ansprüche 1 bis 10, wobei das Trennelement eine Vielzahl von Trennstäben (13) einschließt, die jeweils einen kreisförmigen Querschnitt aufweisen, und wobei die Trennstäbe (13) an dem rotierenden Element befestigt und in einer axialen Richtung des rotierenden Elements ausgerichtet sind, um einen Kamm zu bilden.

12. Vorrichtung nach einem der Ansprüche 1 bis 11, wobei die Trennelemente eine Trennplatte beinhalten, die durch einen plattenartigen Körper gebildet ist.

## Revendications

1. Appareil pour dénouer une masse de nouilles mutuellement nouées comprenant un logement (11) ayant une entrée supérieure (15) au niveau d'une partie moyenne supérieure et une entrée inférieure (16) se trouvant en dessous de l'entrée (15) au niveau d'une partie moyenne inférieure, un élément rotatif pivoté autour d'un arbre rotatif (12) étant agencé horizontalement à l'intérieur dudit logement (11) en dessous de ladite entrée (15) et qui est pivoté par un moyen d'entraînement, et un élément pour dénouer des nouilles fixé audit arbre rotatif (12) pour se prolonger dans une direction radiale, dans lequel ledit logement (11) comprend une surface de paroi interne (14) comportant un arc circulaire pour servir comme une surface de dénouement (17) s'étendant à partir de ladite entrée supérieure (15) vers un niveau horizontal passant à travers un centre dudit élément rotatif, dans lequel ladite surface de la paroi interne (14) se prolonge sensiblement le long d'une surface courbe qui a un rayon plus grand qu'un rayon d'un cercle dessiné par un locus de la pointe rotative dudit élément de dénouement pivoté par ledit élément rotatif et est séparée de la pointe rotative dudit élément de dénouement par un espace, et dans lequel au moins une entrée de ladite surface de dénouement (17) est située à proximité dudit cercle dessiné par le locus de la pointe rotative dudit élément de dénouement pivoté par ledit élément rotatif de sorte qu'une masse de nouilles mutuellement nouées provenant d'une alimentation mise dans le logement (11) à partir de l'entrée supérieure (15) est dénouée d'une telle façon à ce que les éléments de dénouement frappent de façon répétée la masse de nouilles nouées contre la surface de dénouement (17) dans une région proche de ladite entrée de la surface de dénouement (17) et l'évacuation des nouilles dénouées à partir de ladite entrée inférieure (16).

2. Appareil selon la revendication 1, dans lequel
ladite entrée (15) et ladite
sortie (16) ont une largeur sensiblement égale à une largeur dudit logement (11).

3. Appareil selon la revendication 1, dans lequel ladite entrée de ladite
surface de dénouement (17) est placée au niveau d'une extrémité plus inférieure de ladite entrée (15).

4. Appareil selon l'une quelconque des revendications 1-3, dans lequel la surface de dénouement (17) comprend des dépressions et des projections.

5. Appareil selon la revendication 1, dans lequel l'espace entre ladite surface de paroi interne (14) et la pointe dudit élément de dénouement est réglé pour être entre 4 mm et 5 mm.

6. Appareil selon la revendication 1, dans lequel une vitesse de rotation dudit arbre rotatif (12) est supérieure à 800 tpm.

7. Appareil selon l'une quelconque des revendications 1-6, dans lequel une pluralité desdits éléments de dénouement est fixée audit élément rotatif à des positions qui sont séparées les unes des autres par un angle égal visualisé dans une direction rotationnelle de l'élément rotatif.

8. Appareil selon l'une quelconque des revendications 1-7, dans lequel ladite pointe de l'élément de dénouement est formée pour avoir une forme en coupe semi-circulaire.

9. Appareil selon l'une quelconque des revendications 1-8, dans lequel ledit élément de dénouement est plié pour se projeter vers une direction rotationnelle de l'élément de dénouement.

10. Appareil selon les revendications 1-9, dans lequel l'arbre rotatif (12) est formé par une tige ayant une forme en coupe en polygone et lesdites tiges de dénouement de nouilles (13) de chacun des deux éléments de dénouement sont fixées à une surface du polygone de l'arbre rotatif (12).

11. Appareil selon l'une quelconque des revendications 1-10, dans lequel ledit élément de dénouement comprend une pluralité de tiges de dénouement (13) chacune ayant une section en coupe circulaire et lesdites tiges de dénouement (13) sont fixées audit élément rotatif et sont alignées dans une direction axiale de l'élément rotatif pour former un démêloir.

12. Appareil selon les revendications 1-11, dans lequel lesdits éléments de dénouement comprennent une plaque de dénouement formée par un corps de type plaque.
